# EUROPEAN PATENT APPLICATION

(11) **EP 1 970 735 A1**
(43) Date of publication of application: **17.09.2008**
(21) Application number: 07103964.8
(22) Date of filing: 12.03.2007
(51) Int. Cl.: G02B 6/00, H04M 1/22

(54) **Super-thin light-guiding module with a side light-projecting type function**

(71) Applicant: Silitech Technology Corp., Tamsui Taipei Hsien (TW)
(72) Inventor: Chen, Chih-Hung, Taipei County (TW); Hua, Ming-Yu, Taipei City (TW)
(74) Representative: Viering, Jentschura & Partner

(57) **Abstract**

A super-thin light-guiding module with a side light-projecting function includes: a transparent elastic element, at least one light-emitting element, a displaying layer, and an elastic filling layer. The transparent elastic element has a plurality of light-guiding microstructures formed on a bottom thereof. The light-emitting element is disposed beside one side of the transparent elastic element. The displaying layer is disposed on a top side of the transparent elastic element, and the displaying layer has a plurality of transparent portions. The elastic filling layer is disposed between the transparent elastic element and the displaying layer. Therefore, when the light-emitting element projects a light to the transparent elastic element, the light is guided upward via the light-guiding microstructures of the transparent elastic element for making the light pass through the elastic filling layer and the transparent portions of the displaying layer.

## Description

### BACKGROUND OF THE INVENTION

### 1. Field of the Invention

The present invention relates to a super-thin light-guiding module, and particularly relates to a super-thin light-guiding module with a side light-projecting function.

### 2. Description of the Related Art

With the development of information technologies and the advance of network technologies, mobile phones (or cell phones) have grown to be one of the most widespread communication tools. Cell phones have become increasingly popular for consumers due to small size, portability, versatile function, and most importantly, their steadily decreasing price. In terms of purchasing cell phones, the appearance and functions are the determining factors for a majority of buyers. Hence, the market responds to this trend by placing multi-functional, new and attractive cell phones on the market.

In order to illuminate transparent words on the top surface of the key pads of a mobile phone, an LED is generally arranged under the key pads to generate a light. Moreover, the light passes through a rubber layer of the mobile phone and is transmitted upward to illuminate the transparent words on the key pad due to the material property of the rubber material.

However, the transparency of the rubber material is low. Hence, when passing through the rubber layer large amounts of light is absorbed and lost, and the light cannot be transmitted to further areas. Moreover, in the prior art when a designer wanted to illuminate the transparent words, he or she needed to use 6-8 LEDs as the lights.

Some designers use a rubber material with high transparency for reducing light loss. However, there still needs to be at least 4 LEDs as a light. Hence, in the prior the transmission efficiency and uniform property for lights are bad.

### SUMMARY OF THE INVENTION

One particular aspect of the present invention is to provide a super-thin light-guiding module with a side light-projecting function. The purpose of the present invention is that a plurality of light-guiding microstructures are formed under a transparent elastic element with high transmittance such as rubber, and at least one light-emitting element (such as an LED) is disposed beside a lateral face (not under a lateral face) of the transparent elastic element. Hence, the present invention can combine with the original key structure manufacturing processes to obtain a key structure with high illumination and high light-uniforming property.

In order to achieve the above-mentioned aspects, the present invention provides a super-thin light-guiding module with a side light-projecting function, including: a transparent elastic element, at least one light-emitting element, a displaying layer, and an elastic filling layer. The transparent elastic element has a plurality of light-guiding microstructures formed on a bottom side thereof. The at least one light-emitting element is disposed beside one side of the transparent elastic element. The displaying layer is disposed on a top side of the transparent elastic element, and the displaying layer has a plurality of transparent portions. The elastic filling layer is disposed between the transparent elastic element and the displaying layer. Therefore, when the at least one light-emitting element projects a light to the transparent elastic element, the light is guided upward via the light-guiding microstructures and makes the light pass through the elastic filling layer and the transparent portions of the displaying layer.

In order to achieve the above-mentioned aspects, the present invention provides a super-thin light-guiding module with a side light-projecting function, including: a transparent elastic element, at least one light-emitting element, a frame, and a plurality of key bodies. The transparent elastic element has a plurality of light-guiding microstructures formed on a bottom side thereof and a plurality of protrusion structures formed on a top side thereof and corresponding to the light-guiding microstructures. The at least one light-emitting element is disposed beside one side of the transparent elastic element. The frame has a plurality of through holes and is disposed on the transparent elastic element for exposing the protrusion structures. The key bodies are respectively disposed on the protrusion structures, and each key body has a plurality of transparent portions. Therefore, when the at least one light-emitting element projects a light to the transparent elastic element, the light is guided upward via the light-guiding microstructures for making the light pass through the transparent portions of the key bodies.

Because the light-guiding microstructures are combined with the key structure directly, the number of LEDs can be reduced. Hence, power consumption and charging frequency are reduced thus increasing the battery's life. Furthermore, the present invention does not need any other signal elements as light-guiding elements, so the thickness of the whole key structure can be reduced to less than 1 mm.

It is to be understood that both the foregoing general description and the following detailed description are exemplary, and are intended to provide further explanation of the invention as claimed. Other advantages and features of the invention will be apparent from the following description, drawings and claims.

### BRIEF DESCRIPTION OF THE DRAWINGS

The various objects and advantages of the present invention will be more readily understood from the following detailed description when read in conjunction with the appended drawings, in which:
Fig. 1 is a cross-sectional, schematic view of a super-thin light-guiding module with a side light-projecting function according to the first embodiment of the present invention;
Fig. 2 is a cross-sectional, schematic view of a super-thin light-guiding module with a side light-projecting function according to the second embodiment of the present invention;
Fig. 3 is another lateral, schematic view of a light-guiding microstructure for the first embodiment;
Fig. 4 is another lateral, schematic view of a light-guiding microstructure for the first embodiment;
Fig. 5 is a schematic view of a first relative position between a transparent elastic element and a light-emitting element; and
Fig. 6 is a schematic view of a second relative position between a transparent elastic element and a light-emitting element.

### DETAILED DESCRIPTION OF THE PREFERRED EMBODIMENTS

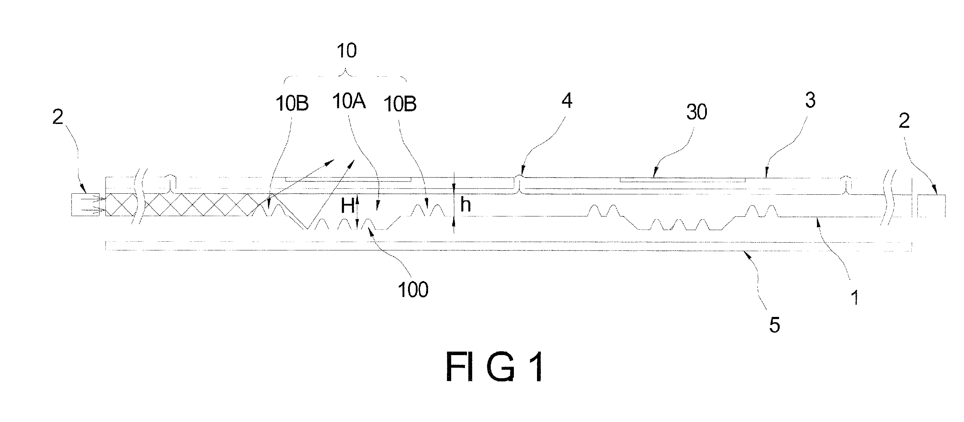

Referring to Fig. 1, the first embodiment of the present invention provides a super-thin light-guiding module with a side light-projecting function, including: a transparent elastic element 1, two light-emitting elements 2, a displaying layer 3, and an elastic filling layer 4.

The transparent elastic element 1 can be made of transparent rubber material or transparent plastic material. Moreover, the transparent elastic element 1 has a plurality of light-guiding microstructures 10 formed on a bottom side thereof. Each light-guiding microstructure 10 has a plurality of concave grooves 100 concaved inward. In addition, each light-guiding microstructure 10 is composed of a first microstructure 10A and a second microstructure 10B that surrounds the first microstructure 10A. The first microstructure 10A has a thickness H larger than a thickness h of the second microstructure 10B.

Moreover, the two light-emitting elements 2 are disposed beside two lateral sides of the transparent elastic element 1, respectively. Each light-emitting element 2 can be an LED (Light Emitting Diode).

Furthermore, the displaying layer 3 is disposed on a top side of the transparent elastic element 1, and the displaying layer 3 has a plurality of transparent portions 30. In addition, the displaying layer 3 can be a metal sheet or a plastic sheet. Alternatively, the transparent portions 30 can be transparent or empty patterns, symbols, words or numerals.

In addition, the elastic filling layer 4 is disposed between the transparent elastic element 1 and the displaying layer 3. The elastic filling layer 4 can be a TPE (Thermoplastic Elastomer) such as TPU (Thermoplastic Polyurethane) film. Furthermore, the present invention further comprises a PCB 5 disposed under the bottom side of the transparent elastic element 1.

Therefore, when the two light-emitting elements 2 respectively project a light to the transparent elastic element 1, the light is guided upward via the light-guiding microstructures 20 making the light pass through the elastic filling layer 4 and the transparent portions 30 of the displaying layer 3.

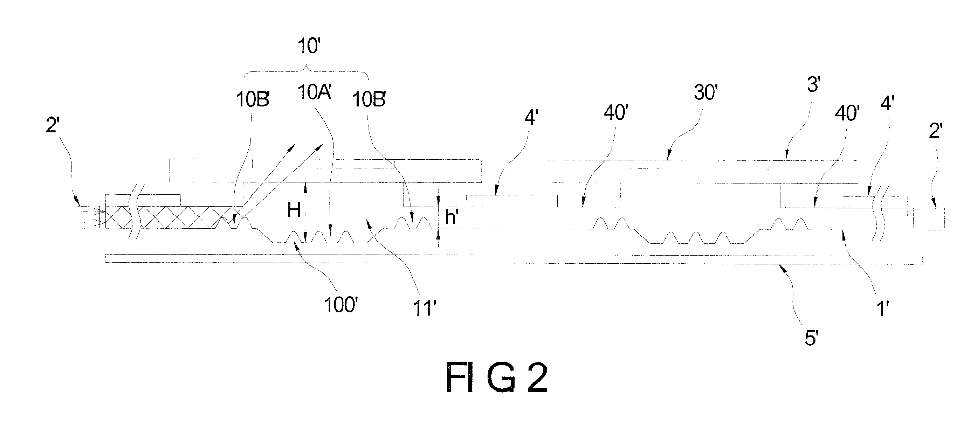

Referring to Fig. 2, the second embodiment of the present invention provides a super-thin light-guiding module with a side light-projecting function, including: a transparent elastic element 1', two light-emitting elements 2', a plurality of key bodies 3, and a frame 4.

The transparent elastic element 1' can be made of transparent rubber material or transparent plastic material. Moreover, the transparent elastic element 1' has a plurality of light-guiding microstructures 10' formed on a bottom side thereof and a plurality of protrusion structures 11' formed on a top side thereof and corresponding to the light-guiding microstructures 10'. Each light-guiding microstructure 10' has a plurality of concave grooves 100' concaved inward. In addition, each light-guiding microstructure 10' is composed of a first microstructure 10A' and a second microstructure 10B' that surrounds the first microstructure 10A'. The first microstructure 10A' has a thickness H' larger than a thickness h' of the second microstructure 10B'.

Moreover, as in the first embodiment, the two light-emitting elements 2' are disposed beside two lateral sides of the transparent elastic element 1', respectively. Each light-emitting element 2' can be an LED (Light Emitting Diode).

Furthermore, the key bodies 3' are respectively disposed on the protrusion structures 11' and each key body 3' has a plurality of transparent portions 30'. In addition, each key body 3' can be a metal sheet or a plastic sheet. Alternatively, the transparent portions 30' are transparent or empty patterns, symbols, words or numerals.

In addition, the frame 4' can be a metal sheet or a plastic sheet. The frame 4' has a plurality of through holes 40' and is disposed on the transparent elastic element 1' for exposing the protrusion structures 11'. In other words, each through hole 40' passes through the corresponding protrusion structure 11' in order to attach the frame 4' to the transparent elastic element 1' and arrange the frame 4' between each two protrusion structures 11' for increasing the structure strength of the transparent elastic element 1'. Furthermore, the second embodiment of the present invention further comprises a PCB 5' disposed under the bottom side of the transparent elastic element 1'.

Therefore, when the two light-emitting elements 2' respectively project a light to the transparent elastic element 1', the light is guided upward via the light-guiding microstructures 10' for making the light pass through the transparent portions 30' of the key bodies 3'.

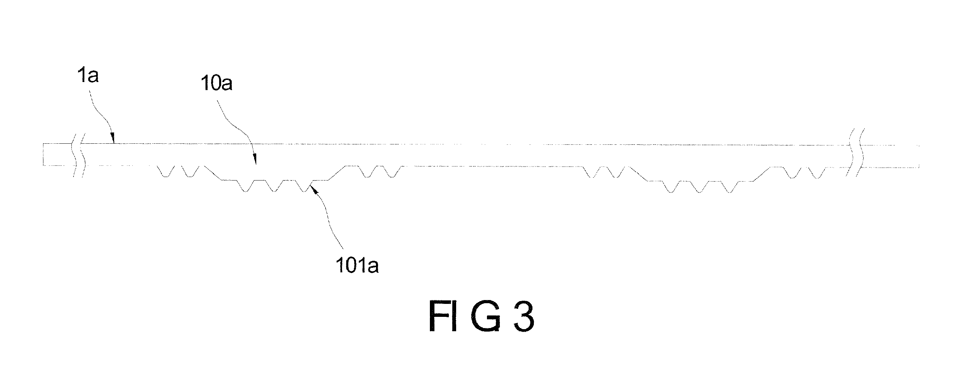

Fig. 3 shows another lateral, schematic view of a light-guiding microstructure for the first embodiment. Each light-guiding microstructure 10a of a transparent elastic element 1a has a plurality of projecting blocks 101a projected outward.

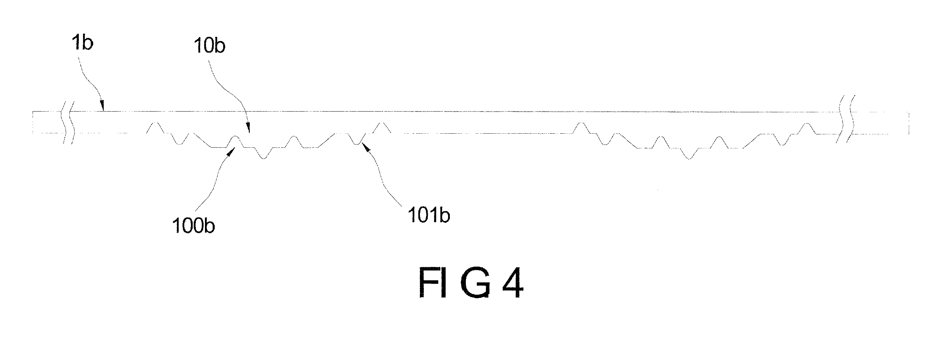

Fig. 4 shows another lateral, schematic view of a light-guiding microstructure for the first embodiment. Each light-guiding microstructure 10b of a transparent elastic element 1b has a plurality of concave grooves 100b concaved inward and a plurality of projecting blocks 101b projected outward.

In other words, in the first embodiment the light-guiding microstructures can be a step type microstructure with any types (concave or protrusion) or shapes (circle or triangle).

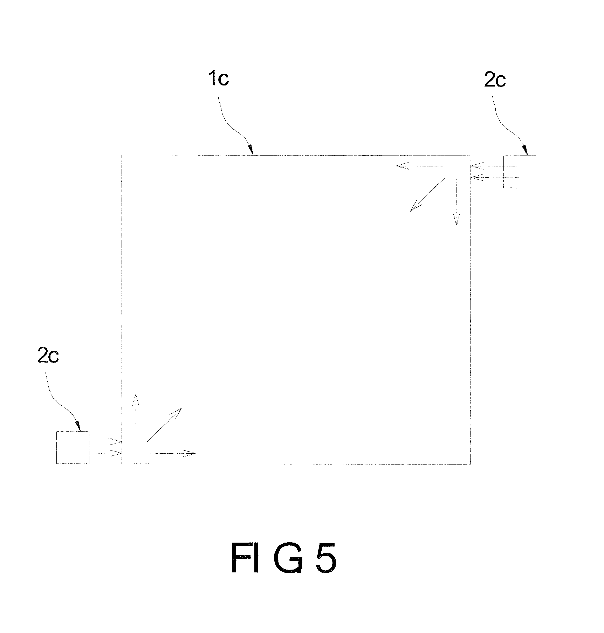

Fig. 5 shows a schematic view of a first relative position between a transparent elastic element and a light-emitting element. Two light-emitting elements 2c are disposed at two lateral sides of two opposite corners of a transparent elastic element 1c. Hence, the lights (such as the arrows) from the two light-emitting elements 2c are uniformly transmitted to every corner of the transparent elastic element 1c. Therefore, the side light-projecting type of the super-thin light-guiding module of the present invention can obtain perfect luminescence efficiency.

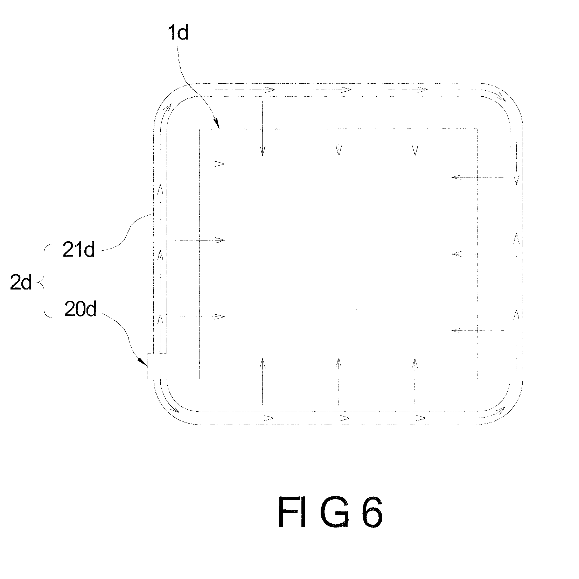

Fig. 6 shows a schematic view of a second relative position between a transparent elastic element and a light-emitting element. A light-emitting element 2d has an LED 20d and a transparent light-guiding line 21d that surrounds a lateral side of a transparent elastic element 1d. The transparent light-guiding line 21d has two opposite sides respectively connected with two opposite sides of the LED 20d. The transparent light-guiding line 21 d can be a fiber or any transparent guiding line.

Furthermore, according to user's needs, the light-emitting element can be an LED or can be composed of a plurality of LEDs. In addition, the light-emitting element can also be composed of an LED and a fiber.

In conclusion, the purpose of the present invention is that the light-guiding microstructures are formed under the transparent elastic element with high transmittance such as rubber, and at least one light-emitting element (such as an LED) is disposed beside a lateral face (not under a lateral face) of the transparent elastic element. Hence, the present invention can combine with an original key structure manufacturing processes to obtain a key structure with high illumination and high light-uniforming property.

Because the light-guiding microstructures are combined with the key structure directly, the number of LEDs can be reduced. Hence, power consumption and charging frequency are reduced therefore increasing the battery's life. Furthermore, the present invention does not need any other signal elements to be light-guiding elements, so that the thickness of the whole key structure can be reduced to less than 1 mm.

Although the present invention has been described with reference to the preferred best molds thereof, it will be understood that the invention is not limited to the details thereof. Various substitutions and modifications have been suggested in the foregoing description, and others will occur to those of ordinary skill in the art. Therefore, all such substitutions and modifications are intended to be embraced within the scope of the invention as defined in the appended claims.

## Claims

1. A super-thin light-guiding module with a side light-projecting function, comprising:
a transparent elastic element having a plurality of light-guiding microstructures formed on a bottom side thereof;
at least one light-emitting element disposed beside one side of the transparent elastic element;
a displaying layer disposed on a top side of the transparent elastic element, wherein the displaying layer has a plurality of transparent portions; and
an elastic filling layer disposed between the transparent elastic element and the displaying layer;
whereby, when the at least one light-emitting element projects a light to the transparent elastic element, the light is guided upward via the light-guiding microstructures for making the light pass through the elastic filling layer and the transparent portions of the displaying layer.

2. The super-thin light-guiding module as claimed in claim 1, wherein the transparent elastic element is made of transparent rubber material or transparent plastic material.

3. The super-thin light-guiding module as claimed in claim 1, wherein each light-guiding microstructure has a plurality of concave grooves concaved inward or a plurality of projecting blocks projected outward.

4. The super-thin light-guiding module as claimed in claim 1, wherein each light-guiding microstructure has a plurality of concave grooves concaved inward and a plurality of projecting blocks projected outward.

5. The super-thin light-guiding module as claimed in claim 1, wherein each light-guiding microstructure is composed of a first microstructure and a second microstructure that surrounds the first microstructure, and the first microstructure has a thickness larger than that of the second microstructure.

6. The super-thin light-guiding module as claimed in claim 1, wherein the at least one light-emitting element is an LED or the at least one light-emitting element is composed of a plurality of LEDs.

7. The super-thin light-guiding module as claimed in claim 1, wherein the at least one light-emitting element has an LED and a transparent light-guiding line that surrounds a lateral side of the transparent elastic element, and the transparent light-guiding line has two opposite sides respectively connected with two opposite sides of the LED; wherein the transparent light-guiding line is a fiber.

8. The super-thin light-guiding module as claimed in claim 1, wherein the displaying layer is a metal sheet or a plastic sheet.

9. The super-thin light-guiding module as claimed in claim 1, wherein the transparent portions are transparent or empty patterns, symbols, words or numerals.

10. The super-thin light-guiding module as claimed in claim 1, wherein the elastic filling layer is a TPE (Thermoplastic Elastomer).

11. A super-thin light-guiding module with a side light-projecting function, comprising:
a transparent elastic element having a plurality of light-guiding microstructures formed on a bottom side thereof and a plurality of protrusion structures formed on a top side thereof and corresponding to the light-guiding microstructures;
at least one light-emitting element disposed beside one side of the transparent elastic element;
a frame having a plurality of through holes, wherein the frame is disposed on the transparent elastic clement for exposing the protrusion structures; and
a plurality of key bodies respectively disposed on the protrusion structures, wherein each key body has a plurality of transparent portions;
whereby, when the at least one light-emitting element projects a light to the transparent elastic element, the light is guided upward via the light-guiding microstructures for making the light pass through the transparent portions of the key bodies.

12. The super-thin light-guiding module as claimed in claim 11, wherein the transparent elastic element is made of transparent rubber material or transparent plastic material.

13. The super-thin light-guiding module as claimed in claim 11, wherein each light-guiding microstructure has a plurality of concave grooves concaved inward or a plurality of projecting blocks projected outward.

14. The super-thin light-guiding module as claimed in claim 11, wherein each light-guiding microstructure has a plurality of concave grooves concaved inward and a plurality of projecting blocks projected outward.

15. The super-thin light-guiding module as claimed in claim 11, wherein each light-guiding microstructure is composed of a first microstructure and a second microstructure that surrounds the first microstructure, and the first microstructure has a thickness larger than that of the second microstructure.

16. The super-thin light-guiding module as claimed in claim 11, wherein the at least one light-emitting element is an LED or the at least one light-emitting element is composed of a plurality of LEDs.

17. The super-thin light-guiding module as claimed in claim 11, wherein the at least one light-emitting element has an LED and a transparent light-guiding line that surrounds a lateral side of the transparent elastic element, and the transparent light-guiding line has two opposite sides respectively connected with two opposite sides of the LED; wherein the transparent light-guiding line is a fiber.

18. The super-thin light-guiding module as claimed in claim 11, wherein the frame is a metal sheet or a plastic sheet.

19. The super-thin light-guiding module as claimed in claim 11, wherein the key body is a metal sheet or a plastic sheet.

20. The super-thin light-guiding module as claimed in claim 11, wherein the transparent portions are transparent or empty patterns, symbols, words or numerals.
